# EUROPEAN PATENT APPLICATION

(11) **EP 4 057 620 A1**
(43) Date of publication of application: **14.09.2022**
(21) Application number: 22156015.4
(22) Date of filing: 10.02.2022
(51) Int. Cl.: H04N 5/232, G02B 21/36, G06T 3/40

(54) **IMAGING METHOD, IMAGING APPARATUS, POSITIONAL DEVIATION AMOUNT CALCULATION METHOD, COMPUTER PROGRAM AND RECORDING MEDIUM**

(30) Priority: 10.03.2021 JP 2021038058
(71) Applicant: SCREEN Holdings Co., Ltd., Kyoto 602-8585 (JP)
(72) Inventor: YASUDA, Takuya, Kyoto, 602-858 (JP)
(74) Representative: Goddar, Heinz J.

(57) **Abstract**

An imaging method according to the invention includes storing image data corresponding to an original image in a memory every time one original image is obtained and calculating positional deviation amounts between the original images. For each of the original images, an object image number indicating the number of calculation object images serving as calculation objects for the positional deviation amount, is set based on a positional relationship of the imaging fields of view. The image data corresponding to a particular image is released from the memory. The particular image is an original image of which a number of the calculation object images already used to calculate the positional deviation amount between this particular image increased to the object image number.

## Description

### BACKGROUND OF THE INVENTION

### 1. Field of Invention

This invention relates to an imaging technique for imaging an imaging object while dividing the imaging object into a plurality of imaging fields of view.

### 2. Description of the Related Art

When an image in a range wider than an imaging field of view of an imager is necessary, a combined image may be generated from original images captured by dividing an imaging object into a plurality of imaging fields of view. In such a case, imaging is performed with adjacent ones of the imaging fields of view partially overlapped and the images are combined while positional deviations between the original images are corrected based on image contents of overlapping parts. For example, in a technique described in PCT International Publication No. WO2019/053839 (patent literature 1), one wide-field image is obtained by calculating positional deviation amounts between a plurality of images captured to partially overlap each other and combining the plurality of images based on a calculation result.

Further, in the case of dividing an imaging object into a plurality of imaging fields of view in this way, particularly a method for dynamically determining the arrangement of images according to the shape and physical properties of an imaging object is, for example, described in JP 2018-040569 (patent literature 2).

When positional deviations are corrected based on image contents using an arithmetic processing device such as a computer device, the data of an image to be corrected needs to be saved in a memory. If the size of the image is large, a large memory resource is necessary. As a method for avoiding a memory resource shortage due to this, it is, for example, considered to reduce a data amount by compressing an image or save image data in a large capacity storage such as a hard disk drive.

However, in the positional deviation correction based on the compressed image, the calculation accuracy of the positional deviation amount may be reduced. Further, in the method for saving the image data in the storage, an operation needs to be performed while the image data is transferred from the storage to the memory in calculating the positional deviation amount. In this way, a time required for an arithmetic processing becomes long, thereby causing a problem of impairing a real time property.

### SUMMARY OF THE INVENTION

This invention was developed in view of the above problem and aims to provide a technique capable of calculating a positional deviation amount between images without impairing a real time property even with a limited memory resource in a technique for imaging an imaging object while dividing the imaging object into a plurality of imaging fields of view.

One aspect of this invention is directed to an imaging method for imaging an imaging object while dividing the imaging object into a plurality of imaging fields of view. The imaging method includes obtaining a plurality of original images by imaging the imaging object with the imaging fields of view made different from each other and adjacent ones of the imaging fields of view partially overlapped, storing image data corresponding to the original image in a memory every time one original image is obtained, and calculating positional deviation amounts between the original images.

Further, another aspect of this invention is directed to an imaging apparatus with an image acquisitor for obtaining a plurality of original images by imaging an imaging object with imaging fields of view made different from each other and adjacent ones of the imaging fields of view partially overlapped, a memory for temporarily storing image data corresponding to the original images, and a processor for calculating positional deviation amounts between the original images.

In these inventions, for each of the original images, an object image number indicating the number of calculation object images, the calculation object images being the other original images having the imaging fields of view overlapping that of the original image and serving as calculation objects for the positional deviation amount, is set based on a positional relationship of the imaging fields of view. When the original image is newly obtained, the positional deviation amount between this new original image and the calculation object image already obtained and having the image data stored in the memory is calculated based on image contents of overlapping parts of these images. Further, the image data corresponding to a particular image is released from the memory. The particular image is an original image of which a number of the calculation object images already used to calculate the positional deviation amount between this particular image increased to the object image number.

In the invention thus configured, in the case of imaging the imaging object while dividing the imaging object into the original images in the plurality of imaging fields of view, the "object image number" is set for each original image. The object image number is the number of the other original images serving as the calculation objects for the positional deviation amount from the original image, and can be set in advance based on the positional relationship of the imaging fields of view during imaging. Moreover, the positional deviation amount is calculated between each original image and the calculation object image serving as the calculation object for the positional deviation amount from the original image.

This "object image number" corresponds, in other words, to the number of times by which each original image is applied to the positional deviation calculation process from another original image. Out of the plurality of original images obtained by imaging, the one having the number of the calculation object images, for which the positional deviation amount from this original image was calculated, increased to the object image number is not used as the "calculation object image" in the subsequent calculation of the positional deviation amount. Thus, the image data of this original image needs not be saved in the memory. If such image data is released from the memory, i.e. the writing of other data in a storage region in the memory occupied by this image data is allowed, it is avoided that unnecessary image data reduces the storage resource of the memory. For example, the newly obtained image data can be saved by deleting the unnecessary image data.

As just described, in the invention, for each of the original images obtained by dividing and imaging the imaging object by setting different imaging fields of view, the number of the other original images used in the calculation of the positional deviation amount from this original image is obtained as the object image number. Then, the image data of the original image having the number of the other original images used in the calculation of the positional deviation amount from this original image increased to the object image number, out of the respective original images, is released from the memory.

Thus, it is not necessary to store all the original images in the memory and a memory capacity necessary for the process can be reduced. On the other hand, since the image data of the images used in the subsequent calculation process is kept saved in the memory, it is avoided that a real time property of the calculation process is impaired.

Further, another aspect of this invention is directed to a positional deviation amount calculation method for calculating positional deviation amounts between a plurality of original images obtained by imaging an imaging object while dividing the imaging object into a plurality of imaging fields of view with adjacent ones of the imaging fields of view partially overlapped, the positional deviation amount calculation method including obtaining image data corresponding to the original images and storing the image data in a memory, and calculating the positional deviation amounts between the original images.

Here, for each of the original images, an object image number indicating the number of calculation object images, the calculation object images being the other original images having the imaging fields of view overlapping that of the original image and serving as calculation objects for the positional deviation amount, is set based on a positional relationship of the imaging fields of view. When the original image is newly obtained, the positional deviation amount between this new original image and the calculation object image already obtained and having the image data stored in the memory is calculated based on image contents of overlapping parts of these images. Further, the image data corresponding to a particular image is released from the memory. The particular image is an original image of which a number of the calculation object images already used to calculate the positional deviation amount between this particular image increased to the object image number.

Still another aspect of this invention is directed to a computer program for causing a computer device to perform each processing of the positional deviation amount calculation method and a computer-readable storage medium non-transitorily storing this computer program.

In the invention thus configured, unnecessary image data can be deleted while image data, which should be saved in the memory for the calculation of the positional deviation amount, is left as in the above invention. In this way, a memory usage can be reduced without impairing a real time property of the process.

As described above, according to the invention, for each of the plurality of original images, the number of the other original images used in the calculation of the positional deviation amount from this original image (object image number) is obtained. When the number of the other original images serving as the objects for the calculation process reaches the object image number, the image data of this original image is released from the memory. By so doing, the positional deviation amount between the images can be calculated without impairing the real time property even with a limited memory resource.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

### BRIEF DESCRIPTION OF THE DRAWINGS

FIG. 1 is a diagram showing a schematic configuration of a first embodiment of an imaging apparatus according to the invention.
FIGS. 2A and 2B are diagrams showing an allocation example in the case of imaging the specimen container while dividing the specimen container into a plurality of imaging fields of view.
FIGS. 3A and 3B are charts showing an example of original images used as a case example of this embodiment.
FIGS. 4A and 4B are charts showing a relationship of an imaging sequence of the original images and the original images for which the positional deviation amount can be calculated.
FIG. 5 is a timing chart showing the principle of the imaging process of this embodiment.
FIG. 6 is a flow chart realizing the imaging process of FIG. 5.
FIG. 7 is a flow chart showing the modification of the imaging process.
FIGS. 8A and 8B are flow charts showing two examples of a retry imaging judging process.
FIG. 9 is a timing chart showing a state change of each component in this modification.
FIG. 10 is a diagram showing a configuration example of an imaging apparatus in which an imaging unit and an image processing unit are separately configured.
FIG. 11 is a flow chart showing the operation of the imaging unit.
FIG. 12 is a flow chart showing the operation of the image processing unit.

### DETAILED DESCRIPTION OF THE PREFERRED EMBODIMENTS

### <First Embodiment>

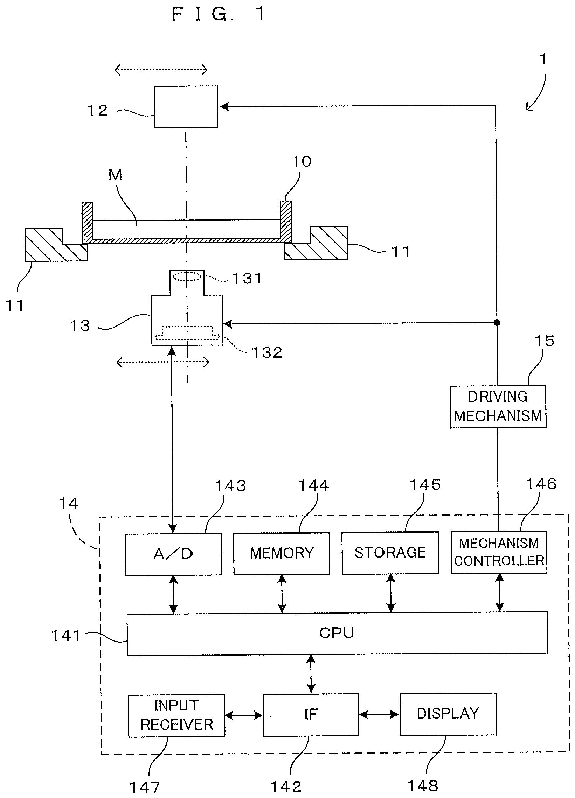

FIG. 1 is a diagram showing a schematic configuration of a first embodiment of an imaging apparatus according to the invention. This imaging apparatus 1 is an apparatus for imaging a living specimen such as cells carried in a specimen container 10 which is called a dish, flat and has an open upper surface. A predetermined amount of a liquid serving as a culture medium M is injected into the specimen container 10, and the cells or the like cultured under predetermined culture conditions in this liquid serve as an imaging object of this imaging apparatus 1. The culture medium may be added with an appropriate reagent or may be gelled after being injected in a liquid state into the specimen container 10.

Note that although the living specimen is illustrated and described as the imaging object here, an imaging object in the invention is not limited to this. For example, a tissue section, a pathological specimen or the like carried in an appropriate carrier may be the imaging object. Further, the specimen container may be a well plate provided with a plurality of wells and a living specimen carried in each well may be the imaging object.

Further, the invention can be, for example, applied to imaging for quality inspection and process evaluation for industrial products such as printed circuit boards, semiconductor chips or wafers, display panels and the like having a regular pattern formed thereon.

The imaging apparatus 1 includes a holder 11 which holds the specimen container 10, an illuminator 12 arranged above the holder 11, an imager 13 arranged below the holder 11 and a controller 14 which includes a CPU 141 controlling the operation of these components. The holder 11 holds the specimen container 10 in a substantially horizontal posture by being held in contact with a peripheral edge part of the lower surface of the specimen container 10.

The illuminator 12 emits an illumination light toward the specimen container 10 held by the holder 11. For example, a white LED (light emitting diode) may be used as a light source of the illumination light. A combination of the light source and an appropriate illumination optical system are used as the illuminator 12. The imaging object in the specimen container 10 is illuminated by the illuminator 12 from above.

The imager 13 is provided below the specimen container 10 held by the holder 11. In the imager 13, an imaging optical system is arranged at a position right below the specimen container 10. An optical axis of the imaging optical system extends in a vertical direction. FIG.1 shows a side view. An up and down direction of the figure indicates a vertical direction.

By the imager 13, the imaging of the imaging object in the specimen container 10 is performed. Specifically, light emitted from the illuminator 12 and incident on the surface of the liquid from above the specimen container 10 illuminates the imaging object. Light transmitted downward from the bottom surface of the specimen container 10 is incident to a light receiving surface of an imaging element 132 via the imaging optical system of the imager 13 including an objective lens 131. An image of the imaging object formed on the light receiving surface of the imaging element 132 by the imaging optical system is imaged by the imaging element 132. The imaging element 132 is an area image sensor having a two-dimensional light receiving surface. A CCD sensor or a CMOS sensor can be used as the imaging element 132.

The imager 13 is capable of moving in the horizontal direction and the vertical direction by a mechanism controller 146 provided in the controller 14. Specifically, the mechanism controller 146 moves the imager 13 in the horizontal direction by operating a driving mechanism 15 based on a control command from the CPU 141. By doing so, the imager 13 moves relative to the specimen container 10 in the horizontal direction. Further, focusing is performed by moving the imager 13 in the vertical direction.

Further, the as indicated by arrows with dotted lines shown in FIG.1, the driving mechanism 15 moves the illuminator 12 integrally with the imager 13 when the imager 13 is moved in the horizontal direction. Specifically, the illuminator 12 is arranged such that a center of emitted light substantially coincides with the optical axis of the imaging optical system. When the imager 13 moves in the horizontal direction, the illuminator 12 also moves in conjunction with the imager 13. By doing so, whenever the imager 13 moves relative to the specimen container 10, the center of light emitted from the illuminator 12 always positions on the optical axis of the imager 13. Consequently, the illuminating condition becomes constant regardless of which specimen container 10 is to be imaged, wherefore imaging conditions can be maintained to be satisfactory.

The image signal output from the imaging element 132 of the imager 13 is send to the controller 14. The image signal is input to an AD converter (A/D) 143 provided in the controller 14 and converted into digital image data. The CPU 141 functions as an image processor which performs appropriate image processings based on the received image data.

The controller 14 further includes a memory 144 for storing image data and a storage 145 for storing programs to be executed by the CPU 141 and data generated by the CPU 141. The memory 144 can be accessed from the CPU 141 at high speed, but has less storage capacity than the storage 145. The storage 145 includes a hard disk drive (HDD), for example, which has more storage capacity and less access speed than the memory 144. These can be used properly according to the purpose. The CPU 141 performs variable calculation processings described later by executing a control program stored in the storage 145.

Besides, the controller 14 is provided with an interface (I/F) 142. The interface 142 has a function of receiving an operation input from a user and presenting information such as processing results to the user. The controller 14 also has a function of performing data exchange with an external apparatus connected via a communication line. To realize the user interface function, an input receiver 147 for receiving an operation input from the user and a display 148 for displaying the messages to the user, a processing result or the like are connected to the interface 142.

An imaging field of view of the imager 13 changes depending on an imaging magnification. Particularly in high magnification imaging, the size of the imaging field of view is possibly smaller than the bottom surface size of the specimen container 10. To image the entire specimen container 10 in such a case, an image of a large size is generated by imaging a range to be imaged while dividing this range into a plurality of imaging fields of view and combining a plurality of original images thus obtained by an image processing.

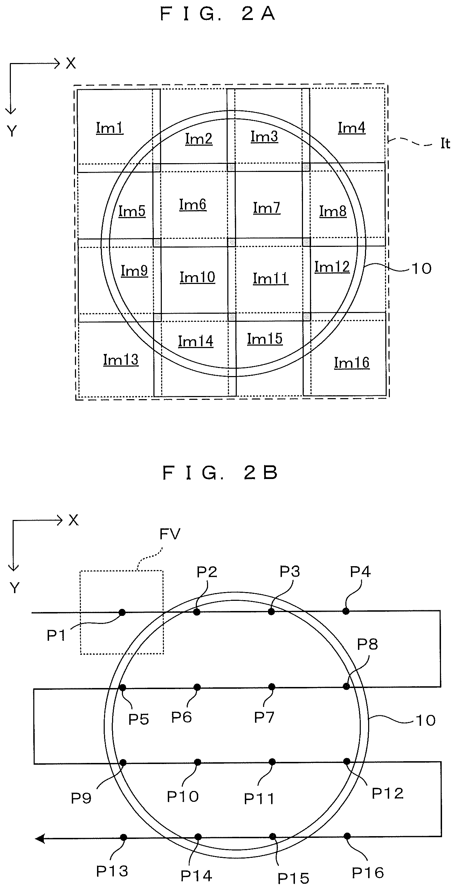

FIGS. 2A and 2B are diagrams showing an allocation example in the case of imaging the specimen container while dividing the specimen container into a plurality of imaging fields of view. FIG. 2A is a diagram showing an example of the arrangement of images in the case of imaging the specimen container 10 while dividing the specimen container 10 into a plurality of imaging fields of view. FIG. 2B is a diagram showing a scanning path of the imager 13 for imaging the specimen container 10, more specifically a path of an optical axis of the imager 13. Such coordinate axes that a horizontal direction of FIGS. 2A and 2B is an X direction and a vertical direction thereof is a Y direction are set for the following description. Since the specimen container 10 is so held that the bottom surface is horizontal, an XY plane corresponds to a horizontal plane.

If an imaging field of view FV of the imager 13 cannot cover the entire specimen container 10, the specimen container 10 is imaged while being divided into a plurality of original images Im1 to Im16 as shown in FIG. 2A. These original images Im1 to Im16 are pieced together and combined by an image processing after imaging, whereby a combined entire image It of the entire specimen container 10 is generated. To enable the original images to be smoothly pieced together and mutual positional deviations to be smoothly corrected, the original images are so allotted that partial regions overlap each other between adjacent ones of the original images.

The imager 13 is relatively moved to scan along the bottom surface of the specimen container 10 and imaging is performed a plurality of times during that time, whereby these original images are obtained. Specifically, as shown by a line arrow in FIG. 2B, by combining movements in the X direction and movements in the Y direction of the imager 13, the imager 13 is moved to scan along the bottom surface of the specimen container 10. By performing imaging a plurality of times in that process, the original images can be obtained. Points P1 to P16 in FIG. 2B indicate that imaging is performed when the optical axis of the imager 13 is at the positions of these points. The position of the imager 13 when imaging is performed in this way is called an "imaging position" below.

More specifically, the imager 13 is moved to scan in the (+X) direction with respect to the specimen container 10 and repeatedly performs imaging at predetermined timings. For example, the original image Im1 is obtained at the imaging position P1, and the original image Im2 is obtained at the imaging position P2. After the original images Im3 and Im4 are similarly obtained at the imaging positions P3, P4, the imager 13 is fed by a predetermined pitch in the (+Y) direction.

Subsequently, the imager 13 is moved in the (-X) direction, and imaging is performed at each of the imaging positions P8, P7, P6 and P5, whereby the original images Im8, Im7, Im6 and Im5 are respectively obtained. Further, after the imager 13 is moved in the (+Y) direction, the original images Im9, Im10, Im11 and Im12 are captured while the imager 13 is moved in the (+X) direction again. Finally, the original images Im16, Im15, Im14 and Im13 are captured while the imager 13 is moved in the (-X) direction after the movement in the (+Y) direction. As just described, the arrangement of the original images and an imaging sequence do not necessarily coincide.

By appropriately setting an imaging schedule specifying a combination of the imaging timings during the scanning movement in the (+X) direction or (-X) direction of the imager 13 and the feed pitch in the Y direction, imaging can be performed according to the given allocation of the original images. A scanning movement in the X direction may be referred to as a "main scanning movement" and a scanning movement in the Y direction may be referred to as a "sub scanning movement" below.

Although imaging is performed with the specimen container 10 divided into 16 imaging fields of view FV in this example, the allocation of the imaging fields of view for an imaging object is not limited to this and is arbitrary. If a relationship of the size of an imaging object and the size of the imaging field of view FV of the imager 13 is known in advance, there are considered various arrangements of original images satisfying a condition that the entire imaging object is covered and the original images partially overlap each other.

An imaging process of this embodiment for generating an entire image by imaging the imaging object while dividing the imaging object into a plurality of imaging fields of view and finally combining a plurality of original images thus obtained into one is described below. In combining the images, corrections corresponding to positional deviations between the original images possibly caused during imaging are made. Specifically, a relative positional deviation is calculated between two original images overlapping each other based on image contents of the overlapping parts, and the original images are pieced together after the positional deviation is corrected based on a calculation result. By so doing, it is possible to obtain the entire image free from unnatural seams.

Various known techniques can be applied as a method for calculating a positional deviation amount and this method is not particularly limited in this embodiment. For example, a pattern matching method can be applied in which, between original images overlapping each other, an image of one overlapping part is used as a template and a corresponding region in the other original image is searched. Further, a method using an optical flow estimation method may be applied.

Note that the specimen container 10 having the circular bottom surface is divided into a plurality of imaging fields of view FV, each of which has a substantially square shape, and 16 original images Im1 to Im16 are obtained in the example described above. An example of the following original images is used as a more general case example below.

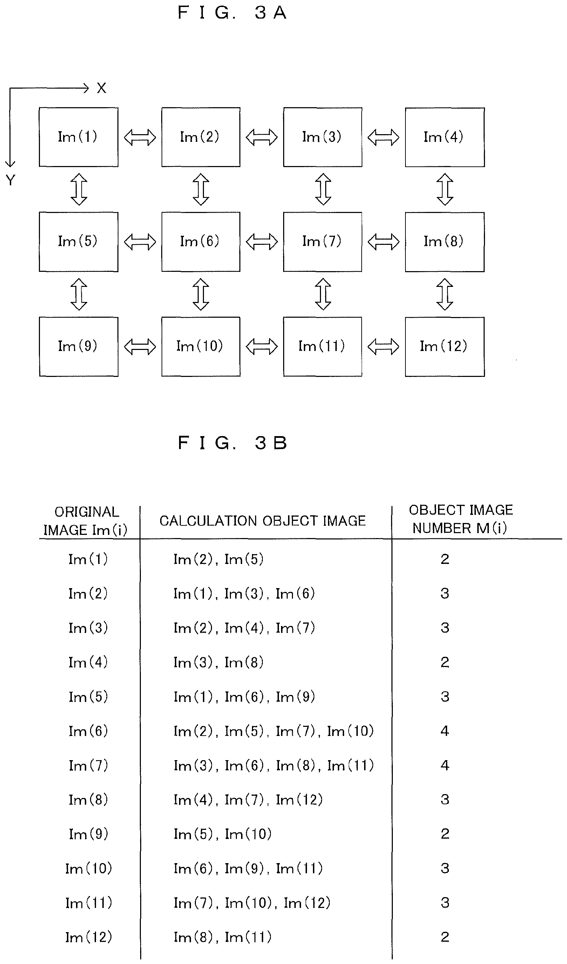

FIGS. 3A and 3B are charts showing an example of original images used as a case example of this embodiment. It is assumed below to use a total of 12 original images Im(1) to Im(12) having a rectangular shape and divided with four original images captured in the X direction and three original images captured in the Y direction as shown in FIG. 3A. A positional relationship of these original images Im(i) (i = 1, 2, ..., 12) can be thought to correspond to the original images Im1 to Im12 shown in FIG. 2A.

As described above, imaging is so performed that adjacent ones of the original images partially overlap each other. Further, the positional deviation amount between the original images is obtained based on the image contents of the overlapping parts. Arrows in FIG.3A indicate combinations of the original images serving as calculation objects for the positional deviation amount. For example, for the image Im(1) on a left upper side, the original image Im(2) adjacent on a right side and the original image Im(5) adjacent on a lower side are calculation objects. The other original image serving as the calculation object of the positional deviation amount for one original image is referred to as a "calculation object image" below. Further, for example, for the original image Im(6), four original images Im(2), Im(5), Im(7) and Im(10) adjacent in the vertical direction and lateral direction are calculation object images.

Note that the original images adjacent in an oblique direction, e.g. the original images Im(1) and Im(6) also partially overlap. However, since the area of the overlapping part is small and a sufficient calculation accuracy cannot be obtained, the positional deviation is not evaluated between the original images in such a positional relationship.

FIG. 3B is a chart compiling a relationship of each original image Im(i) and the calculation object images corresponding thereto. In this way, for each original image Im(i), the calculation object images can be respectively specified according to the arrangement of the original image Im(i) and the number of the calculation object images is not uniform. A right column of FIG. 3B shows the number M(i) of the calculation object images corresponding to each original image Im(i). This number is referred to as an "object image number" in this description. For example, the calculation object images corresponding to the original image Im(1) are the original images Im(2) and Im(5), and the object image number M(1) is 2. Further, for example, the calculation object images corresponding to the original image Im(3) are the original images Im(2), Im(4) and Im(7), and the object image number M(3) is 3.

The object image numbers can be similarly defined for an arbitrary allocation of original images. Specifically, the overlapping parts between the original images can be specified by arranging regions occupied by the respective original images on a two-dimensional coordinate plane according to the allocation during imaging. Then, for one original image, other original images having the areas of the overlapping parts with the one original image in a predetermined range suitable for a positional deviation calculation process may be set as the calculation object images and the number thereof may be counted. Note that evaluation may be conducted, for example, based on the widths of the overlapping parts besides based on the areas of the overlapping parts.

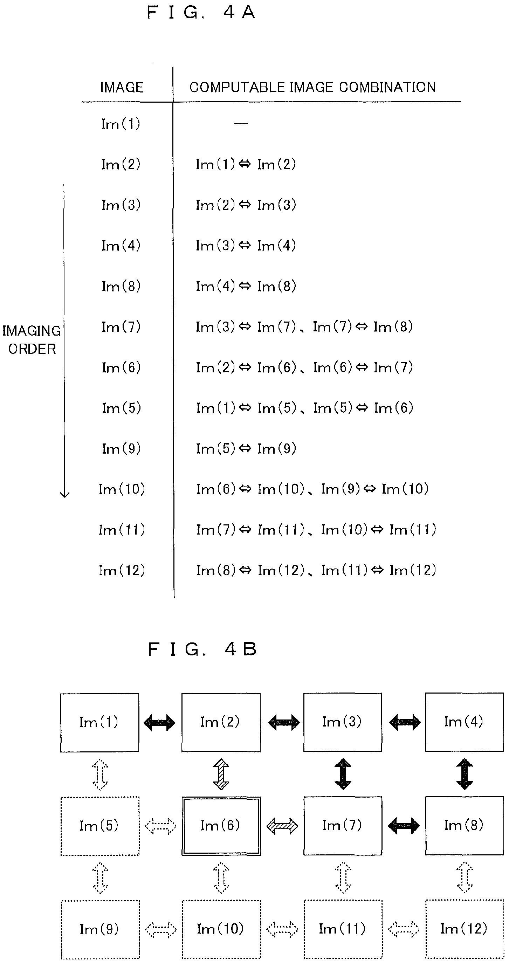

FIGS. 4A and 4B are charts showing a relationship of an imaging sequence of the original images and the original images for which the positional deviation amount can be calculated. As shown in FIG. 2B, in an imaging mode in which the imager 13 repeats a scanning movement in the (+X) direction and a scanning movement in the (-X) direction, the original images Im(1), Im(2), Im(3) and Im(4) are captured in this order by the first scanning in the (+X) direction. Thereafter, the original images Im(8), Im(7), Im(6) and Im(5) are captured in this order by the next scanning in the (-X) direction. Then, the original images Im(9), Im(10), Im(11) and Im(12) are captured in this order by the scanning in the (+X) direction performed again.

Here, there is a considered a relationship of the original images obtained by successively performing imaging in the above order and other original images having image data already obtained by imaging performed previously (hereinafter, referred to as "existing images"). More specifically, when one new original image is obtained, it is considered how many calculation object images are included in the existing images.

Immediately after the first original image Im(1) is captured, no existing image is present. On the other hand, after the second original image Im(2) is captured, the image data of the existing image Im(1) is already stored and these original images are the calculation object images each other. Thus, it is possible to start the calculation of the positional deviation amount between the original images Im(1) and Im(2) at this point of time without waiting for the acquisition of the other original images.

As just described, when a new original image is obtained, if the other original image, which is the calculation object image of the newly obtained original image, is included in the existing images, the positional deviation amount between those original images can be calculated while the next imaging is performed. By so doing, the positional deviation amounts between the respective images are already obtained when the capture of all the images is finished. Thus, the original images can be quickly combined after imaging. Therefore, a real time property in imaging can be improved.

Arrows (⇔) in FIG. 4A indicate that images one after the other are the calculation object images each other. For example, after the original image Im(3) is captured, the original image Im(2) is the calculation object image, out of the existing images. Thus, the positional deviation amount can be calculated between the original images Im(2) and Im(3). A similar idea can be applied also to the following respective original images.

As an example, a state when the original image Im(6) was obtained is shown in FIG. 4B. In FIG. 4B, the original image Im(6) newly obtained by the latest imaging is indicated by a double solid line frame. On the other hand, the original images Im(1) to Im(4), Im(7) and Im(8) indicated by single solid line frames are existing images. The original images Im(5), Im(9) to Im(12) indicated by dotted line frames are images yet to be obtained at this point of time.

Hatched arrows indicate combinations of the original images for which it becomes possible to calculate the positional deviation amount by newly obtaining the original image Im(6). When the original image Im(6) is obtained, the positional deviation amounts can be calculated between the original image Im(6) and the calculation object images Im(2), Im(7) included in the existing images.

In FIG. 4B, black arrows indicate combinations for which it is possible to calculate the positional deviation amount between the existing images obtained by the previous imaging. Dotted line arrows indicate combinations for which the calculation of the positional deviation amount cannot be started at this point of time since at least one of two original images serving as the calculation object images each other is not obtained yet.

Here, if the original images Im(3) and Im(4) are focused, all the calculation object images of these original images are already obtained. For example, all the calculation object images Im(2), Im(4) and Im(7) of the original image Im(3) are already obtained and, if a calculation process was started when the calculation of the positional deviation amount became possible, this process is expected to have been already finished. The same applies also to the original image Im(4). Therefore, the image data of the original images Im(3) and Im(4) is not used in the positional deviation amount calculation process thereafter.

Further, by newly obtaining the original image Im(6), the positional deviation amount between the original images Im(6) and Im(2) can be newly calculated. After this calculation process is finished, the calculation using the original image Im(2) is not performed. That is, the image data of the original image Im(2) is also not used for the positional deviation amount calculation process thereafter. As just described, the image data of the existing image for which the calculation of the positional deviation amounts from all the calculation object images was finished, out of all the existing images, needs not necessarily be saved. This existing image corresponds to a "particular image" of the invention.

In performing the positional deviation amount calculation process, the image data of two original images serving as calculation objects is desirably saved in the memory 144, to which high speed access is possible, to ensure a high speed process. Particularly, since high-definition image data has a large data amount, it is generally stored and saved in the storage 145 having a large storage capacity. However, if necessary data is read out from the storage 145 every time for the calculation of the positional deviation amount, a processing time becomes long.

On the other hand, high speed access is possible to the memory 144, but the memory 144 has a smaller storage capacity than the storage 145 and it may not be possible to store the image data of all the original images in the memory 144. It is also considered to hold the reduced image data of the original images in the memory 144, but it may lead to a reduction in the calculation accuracy of the positional deviation amount due to partial loss of image information in that case.

In the imaging process of this embodiment, the data amount of the image data, which should be stored in the memory 144, is reduced, utilizing a property that the image data needs not be saved any longer if the calculation process of the positional deviation amount proceeds as described above. That is, the calculation process of the positional deviation amount possible between the obtained original image and the existing image(s) is performed concurrently with the other imaging. Along with this, the data amount is reduced by releasing the image data not used in the calculation process thereafter from the memory. In this way, the image data generated by new imaging can be received even with a limited memory resource.

More specifically, a counter C(i) for counting the number of the calculation object images for which the calculation of the positional deviation amount from the original image Im(i) was finished is introduced for each original image Im(i). An initial value of the counter C(i) is 0, and the value of each of the counter C(i) and C(j) is incremented by 1 when the calculation process of the positional deviation amount is finished between one original image Im(i) and another original image Im(j) (j = 1, 2, ..., 12 where i ≠ j). Note that the reference symbol C(i) may be used for indicating both of a counter as a function block and a count value thereof in this description.

The object image number M(i) is obtained in advance for each original image Im(i). As described above, the object image number M(i) indicates the number of times by which the original image Im(i) is applied to the positional deviation amount calculation process between the original image Im(i) and the other original image. Accordingly, if the value of the counter C(i) reaches the object image number M(i), it can be said that the calculation between the original image Im(i) and all the calculation object images has been completed and the image data of the original image Im(i) is not used in the positional deviation calculation process thereafter. That is, the image data can be released from the memory.

Here, an expression "to release the image data from the memory" means that a necessity to save the image data as effective data in the memory is caused to extinguish substantially. Accordingly, this image data may be, for example, deleted from the memory. Further, the overwriting of other data, for example, in a storage region allocated for this image data may be allowed particularly even without data deletion.

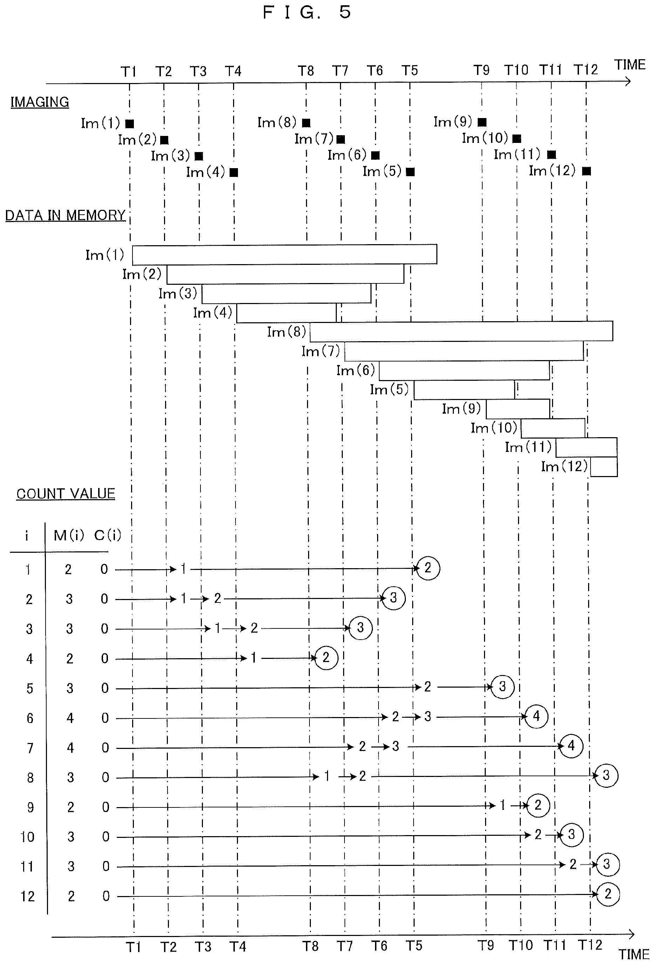

FIG. 5 is a timing chart showing the principle of the imaging process of this embodiment. A relationship of the imaging timing of each original image Im(i) (upper stage), a period during which the obtained image data is stored in the memory (middle stage), and a change of the count value of the counter C(i) (lower stage) is shown in FIG. 5. As described above, for each original image Im(i), the object image number M(i) is determined in advance according to the allocation for imaging. The initial value of the counter C(i) is 0.

Note that index numbers of times T1 to T12 indicating the imaging timings are matched with the numbers of the original images to be captured to prevent description from becoming cumbersome and to facilitate understanding. Thus, it should be noted that the chronological order of the respective times and the order of the indices do not necessary coincide.

At time T1 at which the imager 13 is moved to scan in the (+X) direction and reaches the imaging position P1 (FIG. 2B), the original image Im(1) is captured and the image data having a predetermined size corresponding thereto is written in the memory 144. The image data is held in the memory 144 and occupies a predetermined region in a memory space until a release timing to be described later. The same applies also to the other image data obtained by the subsequent imaging.

At time T2 at which the imager 13 reaches the imaging position P2, the original image Im(2) is captured and the image data of a predetermined size corresponding thereto is written in the memory 144. At this point of time, the positional deviation amount calculation process is possible between the original images Im(1) and Im(2). By performing the positional deviation amount calculation process between these, each of the counters C(1), C(2) is incremented from 0 to 1.

When the original image Im(3) is obtained at time T3, the image data corresponding thereto is written in the memory 144. At this point of time, the positional deviation amount calculation process is possible between the original images Im(2) and Im(3). By performing the positional deviation amount calculation process, the counter C(2) is incremented from 1 to 2 and the counter C(3) is incremented from 0 to 1.

Similarly, when the original image Im(4) is obtained at time T4, the image data corresponding thereto is written in the memory 144 and the positional deviation amount calculation process is possible between the original images Im(3) and Im(4). By performing the positional deviation amount calculation process, the counter C(3) is incremented from 1 to 2 and the counter C(4) is incremented from 0 to 1.

At time T8 at which the imager 13 starts a scanning movement in the (-X) direction and reaches the imaging position P8 after being fed by one step in the (+Y) direction, the original image Im(8) is obtained and the image data is written in the memory 144. At this time, the positional deviation amount calculation process is performed between the original images Im(4) and Im(8). In this way, the counter C(8) is incremented from 0 to 1.

The counter C(4) is also incremented from 1 to 2, but this count value "2" is equal to the object image number M(4) determined for the original image Im(4). A circle mark attached to a number in FIG. 5 indicates that the count value C(i) becomes equal to the object image number M(i). The original image Im(4) at this time is in such a state where the position deviation amount calculation process between the original image Im(4) and any of the original images Im(3), Im(8), which are the calculation object images, has been completed. Therefore, the image data of the original image Im(4) is released from the memory 144, i.e. can be made not to substantially exist in the memory 144. Particularly, if this image data is released from the memory before time T7 at which the next original image Im(7) is captured, the region where the image data of the original image Im(4) was stored can be used to save the image data of the original image Im(7).

When the original image Im(7) is obtained at time T7, the position deviation amount calculation process is performed between the original image Im(7) and each of the original images Im(3), Im(8). In this way, each of the counters C(3), C(8) is incremented by 1. Out of these counters, the count value "3" of the counter C(3) is equal to the object image number M(3) of the original image Im(3). Thus, the image data of the original image Im(3) can be released from the memory 144. Further, since the position deviation amount calculation process was performed between the original image Im(7) and two calculation object images, the count value of the counter C(7) is incremented from 0 to 2. This may be so considered that the counter C(7) was incremented by one in each of the calculation process between the original images Im(3) and Im(7) and the calculation process between the original images Im(8) and Im(7).

Similarly, the image data of the original image Im(2) can be released from the memory 144 at time T6. The image data of the original image Im(1) can be released from the memory 144 at T5. The image data of the original image Im(5) can be released from the memory 144 at time T9. The image data of the original images Im(6), Im(9) can be released from the memory 144 at time T10. The image data of the original images Im(7), Im(10) can be released from the memory 144 at time T11. After time T12 at which the capture of all the original images is completed, the calculation process is performed for the mutual position deviation amounts of the remaining original images Im(8), Im(11) and Im(12) and, finally, all pieces of the image data can be released from the memory 144.

In this way, 12 original images Im(1) to Im(12) are successively captured and the image data is written in the memory 144. However, the image data, which becomes unnecessary by performing the position deviation amount calculation process for any possible combination when one imaging is finished, is released from the memory 144 every time. Thus, as is clear from FIG. 5, the image data simultaneously present in the memory 144 corresponds to five images at most.

From this, it can be said that the memory resource necessary to perform the position deviation amount calculation process in real time for 12 original images can be suppressed to five images according to this embodiment. Therefore, it is not necessary to prepare the memory 144 having a capacity sufficient to store all the original images. Moreover, the process can be performed at a higher speed than in the case of reading the image data from the storage 145.

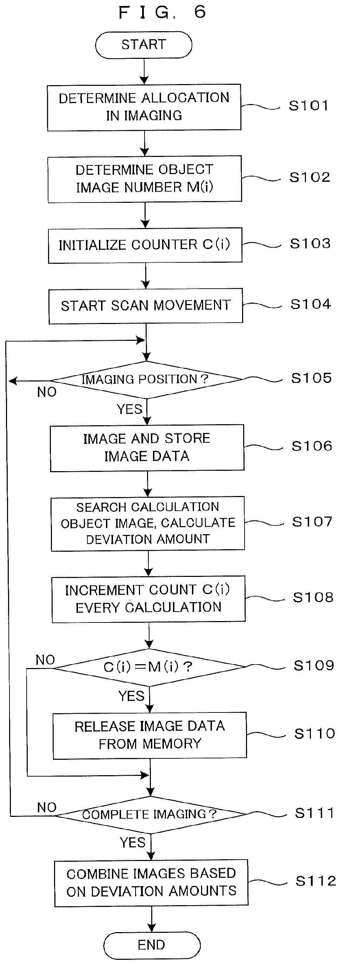

FIG. 6 is a flow chart realizing the imaging process of FIG. 5. This process is realized by the CPU 141 causing each component of the apparatus to perform a predetermined operation based on the control program prepared in advance. At first, the allocation of original images during imaging is determined (Step S101). If the imaging object is known in advance, the allocation can also be determined in advance. Further, the allocation may be dynamically determined from a relationship of the size and the imaging field of view of the imaging object. A technique disclosed in patent literature 2 can be, for example, applied as a specific method for that.

The object image number M(i) is determined (Step S102) and the counter C(i) is initialized to the initial value 0 (Step S103) for each of the original images Im(i), the allocation of which was determined in this way. Here, a variable i is a natural number up to an upper limit equal to the number of the original images determined by the allocation.

Then, a scanning movement of the imager 13 is started based on the imaging schedule specifying a direction of a main scanning movement, a moving speed, a pitch of a sub scanning movement, imaging timings and the like determined according to the allocation of the original images (Step S104). Every time the imager 13 reaches the imaging position (Step S105), imaging by the imager 13 is performed and the obtained image data is saved (Step S106).

In this imaging process, the position deviation amount calculation process between the original images is performed based on the image data stored in the memory 144 as described above. However, the relative position deviation amounts between the original images are calculated in this process, but the position deviations between the original images are not corrected based on calculation results. After all the original images are obtained and the position deviation amounts between those are obtained, a process is performed to combine the images. For the combining process at this time, the image data of all the original images need to be saved.

Thus, the obtained image data are written in both the memory 144 and the storage 145. The image data temporarily stored in the memory 144 is used for the position deviation amount calculation process and deleted when this image data becomes no longer necessary. On the other hand, for the purpose of imaging, it is thought to be naturally required to save the obtained image data over a long term. Thus, the image data is also stored and saved in the storage 145. To combine the images using the position deviation amount calculation results, the image data stored in the storage 145 is used.

When one original image is obtained in this way, the calculation object images are searched from the existing images, the image data of which is stored in the memory 144. The positional deviation amount calculation process is performed if there is any calculation object image (Step S107). Various known techniques capable of specifying regions correlated to each other between two images such as the aforementioned pattern matching process and optical flow method can be utilized as the positional deviation amount calculation process.

For the original image used in the positional deviation amount calculation process, the count of the counter C(i) is incremented (Step S108). Then, the count value of the counter C(i) and the corresponding object image number M(i) are compared (Step S109), and the image data of the corresponding original image Im(i) is released from the memory 144 (Step S110) if the both numbers are equal. Return is made to Step S105 to repeat the process until the capture of all the original images is finished (Step Sill).

When the capture of all the original images is finished, the original images are combined to generate the entire image It (FIG. 2A) (Step S112). At this time, corrections based on the calculated positional deviation amounts are applied for alignment between the original images. In this way, it is possible to obtain a smooth image free from unnatural seams. Note that it is not essential to combine all the original images into one entire image. For example, an image may be generated by combining only parts adjacent to each other, out of a plurality of original images.

The image processing at this time is a processing for piecing the plurality of original images together while adjusting the positions by amounts corresponding to the already obtained positional deviation amounts, and performed based on the image data of all the original images saved in the storage 145. Such an image combining process can also be performed while the imaging apparatus 1 is imaging another imaging object or a different range of the same imaging object.

By the way, in scanning imaging in which imaging is performed while the imager and the imaging object are relatively moved to scan as just described, the acquisition or saving of an image may rarely fail for a certain reason. In such a case, imaging may be tried by performing again the main scanning movement when the acquisition of the image failed. This is referred to as "retry imaging" below.

In the above embodiment, the positional deviation amount calculation process is performed every time one original image is obtained, and the unnecessary image data is released from the memory based on the count C(i) and the object image number M(i). Thus, a situation possibly occurs in which the necessary image data is not left in the memory when retry imaging becomes necessary. In a modification described below, a case where such retry imaging is assumed can also be dealt with.

In the modification of the imaging process described below, many processing contents are common to those of the imaging process (FIG. 6) described above. Accordingly, processing steps having common processing contents to those of FIG. 6 are denoted by the same numbers and are not described in detail. Further, Steps S101 to S103 are not shown to avoid making the figure cumbersome.

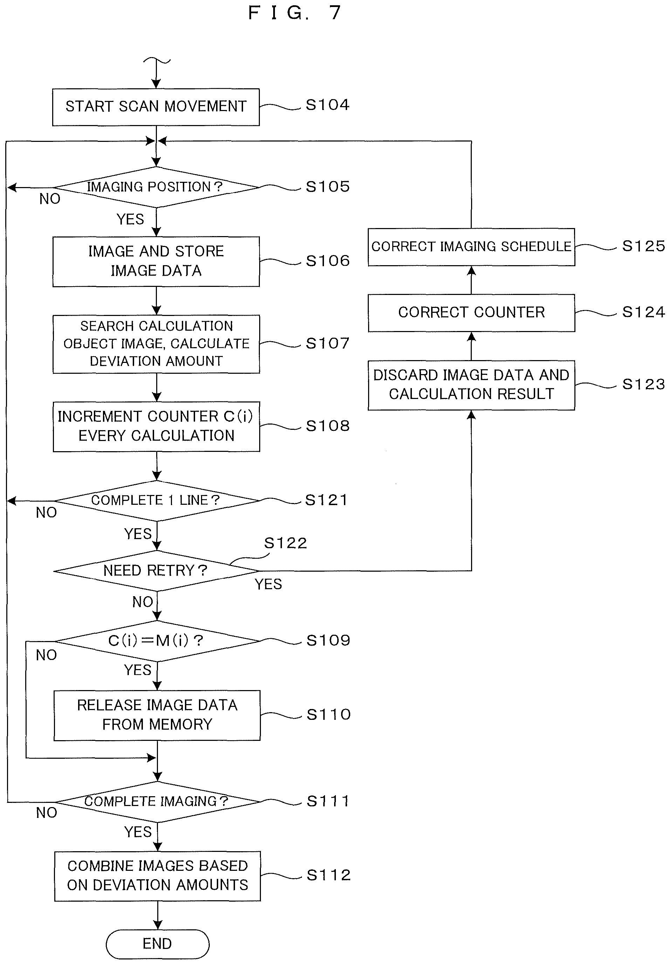

FIG. 7 is a flow chart showing the modification of the imaging process. In the process of this modification, the processing contents up to Step S108 are the same as those shown in FIG. 6. However, after that, when the main scanning movement of one line is finished (Step S121), it is judged whether or not retry imaging is necessary (Step S122). If the original images are obtained without being lost and retry imaging is unnecessary (NO in Step S122), processings in Step S109 and subsequent steps are successively performed and, as a result, the same operation as in the process of FIG. 6 is performed.

Here, "one line" is a concept indicating a series of consecutive main scanning movements of the imager 13 in the (+X) or (-X) direction. For example, in the example shown in FIG. 2B, each of the scanning movement in the (+X) direction successively passing through the imaging positions P1 to P4 and the scanning movement in the (-X) direction successively passing through the imaging positions P8 to P5 corresponds to the scanning movement of "one line".

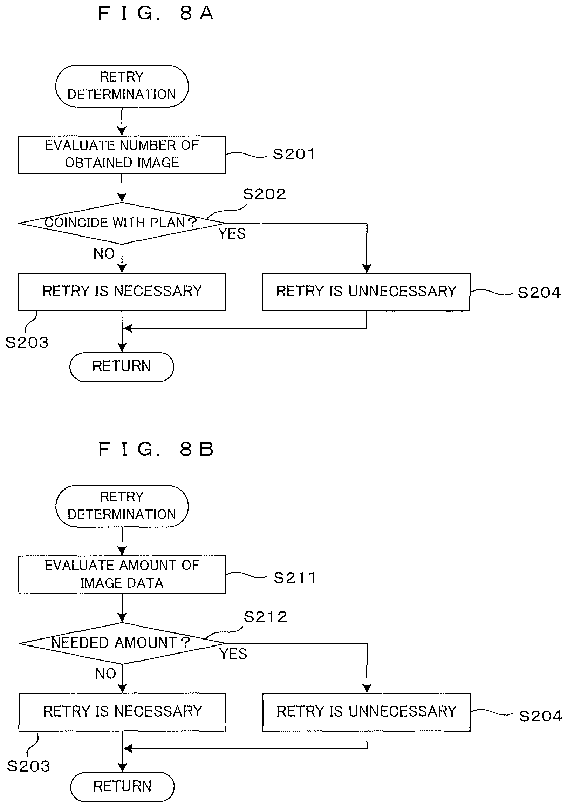

FIGS. 8A and 8B are flow charts showing two examples of a retry imaging judging process. In the first example shown in FIG. 8A, when the main scanning movement of one line is finished, the number of the images obtained by this scanning movement is evaluated (Step S201). Retry imaging is judged to be necessary (Step S203) unless the evaluated value coincides with a number planned in advance (NO in Step S202). On the other hand, if the number of the obtained images coincides with the planned number (YES in Step S202), retry imaging is judged to be unnecessary (Step S204). This judgment is preferably made before the sub scanning movement of the imager 13 is performed.

In the second example shown in FIG. 8B, whether or not retry imaging is necessary is judged not based on the number of the obtained images in one line, but based on whether or not the data amount of the obtained images has reached a necessary amount (Steps S211, S212). The processing contents of the second example are the same as those of the first example except that the judgment criterion is different as just described.

Referring back to FIG. 7, if retry imaging is judged to be necessary (YES in Step S122), the image data obtained by this main scanning movement and the calculation result of the positional deviation amounts using this image data are discarded (Step S123), and the counters C(i) updated during this time are reset to the previous values (Step S124). After the imaging schedule is corrected to perform retry imaging (Step S125), return is made to Step S105. In this way, imaging is resumed based on the corrected imaging schedule.

In retry imaging, imaging is performed again by causing the imager 13 to perform a main scanning movement without any movement in the sub scanning direction. The imaging schedule at this time can be, for example, such that the main scanning movement in the line where the acquisition of the original images was failed is repeated again. In this case, a drastic change of the imaging schedule is not necessary, but the imager 13 needs to be moved to return to the position where this main scanning movement was started. On the other hand, when imaging failed in the scanning movement in the direction opposite to the main scanning direction, e.g. the (+X) direction, an unnecessary movement is not made if retry imaging is performed by a scanning movement in the (-X) direction. However, the imaging schedule is largely changed such as the need of a change for the imaging sequence after the next line. In either mode, retry imaging is possible.

In this modification, whether or not retry imaging is necessary is judged when the scanning imaging of one line is finished. When retry imaging is judged to be necessary, retry imaging is performed after the process based on the wrong data is reset. The release of the unnecessary image data from the memory is performed after retry imaging is judged to be unnecessary. Accordingly, even if retry imaging is necessary, the image data necessary for the positional deviation amount calculation process at that point of time is left in the memory. More specifically, each component is returned to a state before the scanning imaging of a line, for which retry imaging is necessary, was started, thereby being in a state similar to the one before the scanning imaging of this line. Thus, when the calculation of the positional deviation amount based on the image data newly obtained by retry imaging becomes possible, the calculation process can be immediately performed.

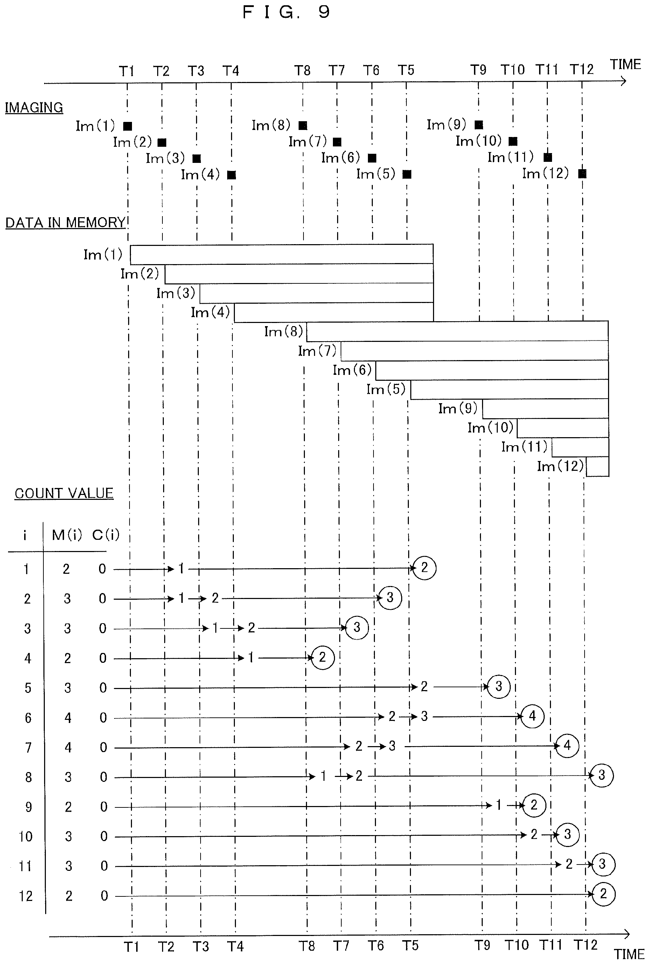

FIG. 9 is a timing chart showing a state change of each component in this modification. As can be understood from the comparison with FIG. 5, in this modification, even if the count C(i) reaches the object image number M(i), the image data is not immediately released from the memory and is released when the scanning imaging of one line is finished and retry imaging is judged to be unnecessary.

Thus, the image data, which should be simultaneously saved in the memory 144, increases to eight original images at most. However, even if retry imaging is necessary, the positional deviation amount calculation process can be performed using the image data newly obtained by retry imaging and the image data of the existing images saved in the memory 144.

Note that, in the above modification, a process of judging whether or not retry imaging is necessary after the scanning imaging of one line is finished (Steps S121 and S122) is added between Step S108 and Step S109. Thus, if the counter C(i) is updated regardless of whether or not retry imaging is necessary and if retry imaging is necessary, the counter C(i) needs to be corrected. Instead of this, if Steps S121 and S122 are provided between Step S107 and Step S108, the counter C(i) is not updated if retry imaging is necessary. In such a case, a counter correction in Step S124 can be omitted while functions and effects similar to those of the above modification are achieved.

Note that it is also possible to make judgement as to whether or not retry imaging is necessary between Step S106 and S107. However, by so doing, the positional deviation amount calculation process cannot be started until the scanning imaging of one line is finished. This cannot be said to be effective in ensuring a real time property in imaging.

### <Second Embodiment>

The imaging apparatus 1 of the first embodiment described above has itself an imaging function and an image processing function. On the other hand, an imaging apparatus of this type may be realized by combining an imaging unit having an imaging function and a minimum control function of activating the imaging function and an image processing unit having no imaging function itself, but having an advanced arithmetic processing function as in a second embodiment to be described next.

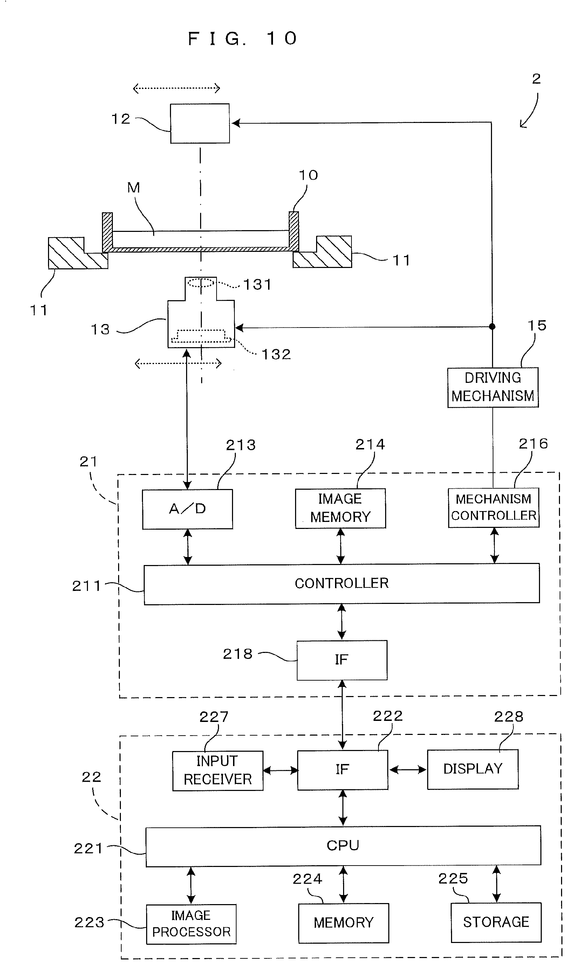

FIG. 10 is a diagram showing a configuration example of an imaging apparatus in which an imaging unit and an image processing unit are separately configured. In this embodiment, substantially the same components as those of the first embodiment (FIG. 1) are denoted by the same reference signs and not described in detail.

In an imaging apparatus 2 of this embodiment, a main part of an image processing requiring an advanced arithmetic function is an image processing unit 22 separate from an imaging unit 21. The image processing unit 22 may be a dedicated device with a dedicated hardware or a general-purpose processing device such as a personal computer or work station including a built-in control program for realizing an image processing function. That is, a general-purpose computer device can be utilized as the image processing unit 22 of this imaging apparatus 2. In the case of using a general-purpose processing device, it is sufficient to provide the imaging unit 21 with a minimum necessary control function to operate each component such as an imager 13 and an image memory for storing image data of one original image. The imager 13 may be considered as a part of the configuration of the imaging unit 21.

The imaging unit 21 includes a controller 211 for controlling the operation of each component of the imaging unit 21, an AD converter 213 for converting an image signal output from the imager 13 into digital image data, an image memory 214 for temporarily storing the image data, a mechanical controller 216 for controlling a driving mechanism 15 and an interface part 218. The image memory 214 may have a storage capacity for at least one original image. Further, the interface part 218 has a function of various information communications with the image processing unit 22. A function of the mechanical controller 216 is equivalent to that of the mechanical controller 146 provided in the first embodiment.

The image processing unit 22 includes a CPU 221 for executing various control programs, a memory 224 for temporarily storing image data and data being computed, and a storage 225 for storing and saving programs to be executed by the CPU 221 and data generated by the CPU 221. Functions of the memory 224 and the storage 225 are equivalent to those of the memory 144 and the storage 145 in the first embodiment. Further, the image processing unit 22 is desirably provided with an image processor 223 serving as a processor specialized in various image processing computations. The CPU 221 may have this function.

Further, the image processing unit 22 is provided with an interface part 222 for various communications with the imaging unit 21. An input receiver 227 for receiving an operation input from a user and a display part 228 for displaying and outputting messages and processing results to the user are connected to the interface part 222. These functions are equivalent to those of the corresponding components in the first embodiment.

In the imaging apparatus 2 thus configured, an imaging process is realized by the cooperation of the imaging unit 21 and the image processing unit 22. Specifically, the CPU 221 provided in the image processing unit 22 executes the control program prepared in advance, thereby controlling each component of the imaging unit 21 and the image processing unit 22 to perform a predetermined operation.

The imaging unit 21 images an imaging object by operating in accordance with an imaging schedule given from the image processing unit 22. Image data generated by imaging is stored in the image memory 214. When the image data corresponding to one original image is obtained, the image data is transferred to the image processing unit 22. That is, the imaging unit 21 has only a function of imaging the imaging object without performing any image processing and outputting image data corresponding to the thus obtained original image obtained thereby.

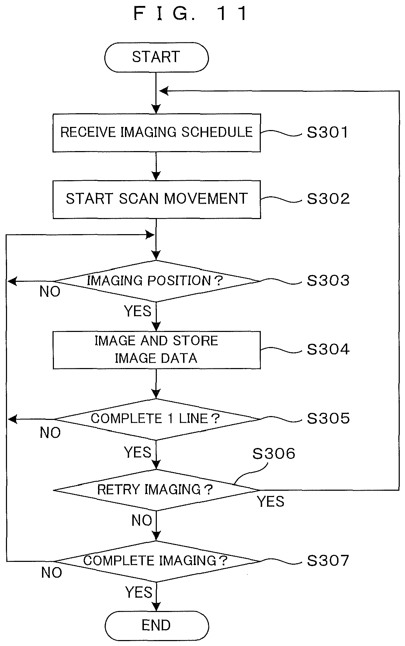

FIG. 11 is a flow chart showing the operation of the imaging unit. The imaging unit 21 receives the imaging schedule transmitted from the image processing unit 22 (Step S301) and performs a scanning movement of the imager 13 in accordance with the imaging schedule (Step S302). Then, imaging is performed at a timing at which the imager 13 reaches an imaging position designated by the imaging schedule and transmits the obtained image data to the image processing unit 22 (Steps S303, S304).

When the scanning imaging of one line is finished (Step S305), it is judged whether or not a retry imaging instruction has been transmitted from the image processing unit 22 (Step S306). If there is no retry imaging instruction (NO in Step S306), the above process is repeated by returning to Step S303 until all imaging operations designated by the imaging schedule are finished (Step S307).

On the other hand, if there is the retry imaging instruction (YES in Step S306), return is made to Step S301 and a new imaging schedule given from the image processing unit 22 is received and imaging is continued. As just described, the imaging unit 21 operates as a subordinate and images the imaging object in response to a control command given from the image processing unit 22.

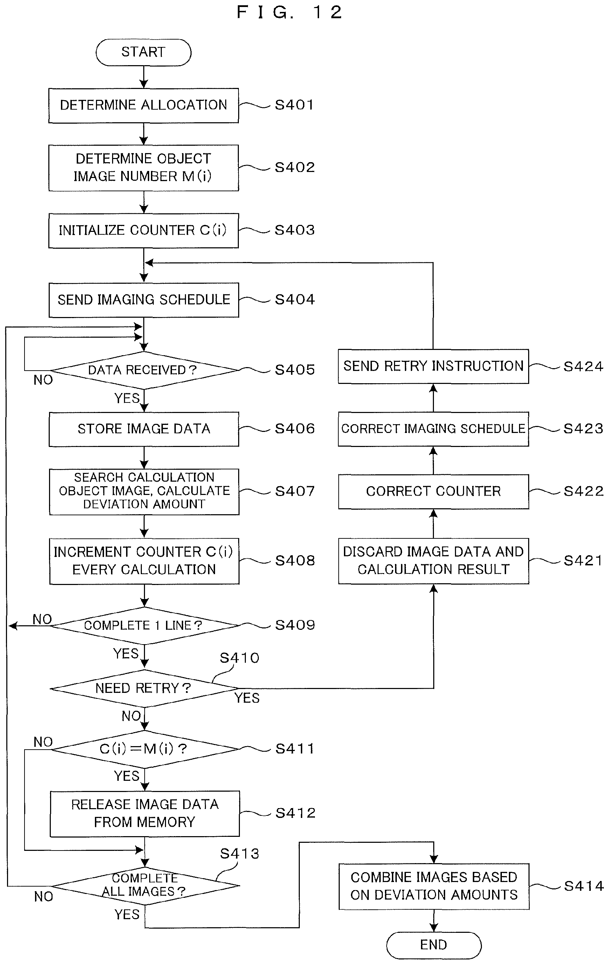

FIG. 12 is a flow chart showing the operation of the image processing unit. In the image processing unit 22, original images during imaging are allocated (Step S401), object image numbers M(i) are determined (Step S402) and counters C(i) are initialized (Step S403) similarly to the imaging process (FIG. 6) in the first embodiment. Then, an imaging schedule set according to an allocation result is transmitted to the imaging unit 21 (Step S404).

When image data of one original image transmitted from the image processing unit 22 according to the imaging schedule is received (Step S405), this image data is stored and saved in the memory 224 and the storage 225 (Step S406) as in the first embodiment. Then, calculation object images are searched from existing images stored in the memory 224 and, if there is any corresponding existing image, a positional deviation amount calculation process is performed. As in the first embodiment, for the original image Im(i) used in the calculation process, a count value of the corresponding counter C(i) is incremented (Step S408).

Similarly to the modification of the first embodiment, it is judged whether or not retry imaging is necessary (Step S410) when the scanning imaging of one line is finished (Step S409). That judgment criterion is similar to that of the first embodiment. If retry imaging is unnecessary (NO in Step S410), the value of the counter C(i) corresponding to each original image Im(i) is compared to the object image number M(i) and the image data is released from the memory 224 if these values coincide (Steps S411 to S412). A process from Step S405 is repeated until the process is finished for all the original images (Step S413). When all pieces of the image data are received and the positional deviation amount calculation process is finished, the images are combined based on the process results and the image data of each original image stored in the storage 225 (Step S414).

On the other hand, if retry imaging is judged to be necessary (YES in Step S410), the image data obtained by the scanning of this line and the positional deviation amount calculation results based on the image data are discarded (Step S421) and the counters C(i) are corrected (Step S422) as in the modification of the first embodiment. Further, the imaging schedule is corrected to perform retry imaging (Step S423) and a retry imaging instruction is transmitted to the imaging unit 21 (Step S424).

By transmitting the new imaging schedule to the imaging unit 21 having received the retry imaging instruction (Step S404), the imaging unit 21 can be caused to perform the imaging operation corresponding to the corrected imaging schedule. In this way, the imaging process similar to that of the imaging apparatus 1 of the first embodiment can be performed by causing the imaging unit 21 and the image processing unit 22 configured as separate bodies to cooperate.

Note that this second embodiment assumes a possibility that retry imaging is necessary when the scanning imaging of one line is finished, as in the modification of the first embodiment. However, it is also possible, as a matter of course, to configure the process flow without this assumption as in the first embodiment.

Further, here, the image processing unit 22 transmits the imaging schedule to the imaging unit 21 and the imaging unit 21 executes this imaging schedule. Instead of this, the image processing unit 22 may execute the imaging schedule and give control commands such as scanning movement instructions and imaging instructions to the imaging unit 21 at necessary timings. In this case, the imaging unit 21 may have only a function of merely operating the illuminator 12 and the imager 13 in response to the control command from the image processing unit 22.

The imaging apparatus 2 of this embodiment can be said to provide a new function not possessed by existing apparatuses by combining the existing imaging unit 21 having no advanced arithmetic function and the image processing unit 22, which is a general purpose computer device having a general hardware configuration, and mounting the program according to the invention in the computer device.

### <Miscellaneous>

As described above, in the imaging apparatus 1 of the first embodiment, the imager 13 corresponds to an example of an "image acquisitor" of the invention. Further, the CPU 141 provided in the control unit 14 functions as a "processor" of the invention and the memory 144 functions as a "memory" of the invention. On the other hand, in the imaging apparatus 2 of the second embodiment, the imaging unit 21 including the imager 13 functions as the "image acquisitor" of the invention. Further, in the image processing unit 22, the CPU 221 and the image processor 223 function integrally as a "processor" of the invention. The memory 224 functions as the "memory" of the invention.

Note that the invention is not limited to the above embodiment and various changes other than the aforementioned ones can be made without departing from the gist of the invention. For example, in the imaging processes of the above embodiments, an image processing not directly involved in imaging can be singly realized as the positional deviation amount calculation process using the already obtained image data. Such a process does not depend on a specific hardware resource and can be, for example, put to practical use as a program executable by a general-purpose computer or a computer-readable storage medium non-transitorily storing that program.

Further, the allocation of the original images described above is merely an example, and should be appropriately set according to the purpose or the gist of the invention. For example, also in the mode for dynamically setting the allocation of the original images for the imaging object as in the technique described in patent literature 2, the invention effectively functions.

Further, the imaging apparatuses of the above embodiments obtain the original images by the intermittent imaging of the imager 13 including an area image sensor as an imaging element and configured to be moved to scan the imaging object. Besides this, the invention is, for example, effective also in an imaging apparatus including a linear image sensor as an imaging element. In this case, strip-like original images extending long in a main scanning direction can be obtained by performing scanning imaging with a direction intersecting a longitudinal direction of the linear image sensor as the main scanning direction. By performing imaging while moving the linear image sensor in a sub scanning direction, it is possible to obtain a plurality of original images having different imaging fields of view in the sub scanning direction. The invention can be applied for the purpose of calculating positional deviation amounts between these original images.

As the specific embodiments have been illustrated and described above, in the imaging method according to the invention, the number of calculation objects for which the positional deviation amounts from the original image were calculated can be, for example, counted for each original image and whether or not to release the image data from the memory can be judged by comparing the count result and the object image number. According to such a configuration, the number of times by which the positional deviation amount was calculated is substantially counted, whereby it is possible to judge whether or not this original image is used for the subsequent positional deviation amount calculation process.

For example, a step of combining a plurality of original images based on the positional deviation amounts can be further provided. According to such a configuration, it is possible to generate a smooth composite image free from unnatural seams.

Further, for example, a plurality of original images can be obtained by performing imaging a plurality of times while an imager for capturing the original images and an imaging object are relatively moved. In such imaging, positional deviations between the original images possibly occur due to a position variation and imaging timing deviations during the movement, but the positional deviation amounts can be calculated and corrected by applying the invention.

In this case, a scanning imaging operation of performing imaging a predetermined number of times while relatively moving the imager in a predetermined main scanning direction with respect to the imaging object can be performed a plurality of times while the position is changed in a sub scanning direction intersecting the main scanning direction. When the number of the original images obtained by one scanning imaging operation and having the image data stored in the memory coincides with a predetermined number, the image data can be released from the memory. According to such a configuration, even if the image data is lost for a certain cause during one scanning imaging operation, it is avoided that the image data necessary for the calculation process is erased since the image data obtained thus far are left in the memory at this point of time.

Further, in this case, if the number of the original images obtained by one scanning imaging operation and having the image data stored in the memory does not coincide with the predetermined number, the scanning imaging operation may be performed again at the same position in the sub scanning direction. By so doing, the process can be continued with delay using newly obtained image data.

This invention can be applied to techniques in general for imaging an imaging object while dividing the imaging object into a plurality of imaging fields of view and is particularly suitable for usage in which positional deviations between original images divided and captured need to be grasped. For example, this invention is effective for the purpose of finally generating one image by combining a plurality of original images.

## Claims

1. An imaging method for imaging an imaging object into a plurality of imaging fields of view, the imaging method comprising:
obtaining (S104-S106) a plurality of original images (Im(i)) by imaging the imaging object with the imaging fields of view made different from each other and adjacent ones of the imaging fields of view partially overlapped;
storing (S106) image data corresponding to the original image in a memory (144) every time one original image is obtained; and
calculating (S107) positional deviation amounts between the original images, wherein:
for each of the original images, an object image number (M(i)) indicating a number of calculation object images, the calculation object images being other original images having the imaging fields of view overlapping that of the original image and serving as calculation objects for the positional deviation amount, is set based on a positional relationship of the imaging fields of view; and
when the original image is newly obtained,
the positional deviation amount between this new original image and the calculation object image already obtained and having the image data stored in the memory is calculated based on image contents of overlapping parts of these images, and
out of the image data storing the memory, the image data corresponding to a particular image is released from the memory (S110), the particular image being the original image of which a number (C(i)) of the calculation object images already used to calculate the positional deviation amount between this particular image increased to the object image number.

2. The imaging method according to claim 1, further comprising:
counting (S108) the number of the calculation object images used to calculate the positional deviation amount between the original image for each original image; and
judging (S109) whether or not to release the image data from the memory by comparing a result of the counting and the object image number.

3. The imaging method according to claim 1 or 2, further comprising combining (S112) a plurality of original images based on the positional deviation amounts.

4. The imaging method according to any one of claims 1 through 3, wherein the plurality of original images are obtained by performing imaging a plurality of times while an imager for capturing the original images and the imaging object are relatively moved.

5. The imaging method according to claim 4, wherein
a scanning imaging operation (S104-S106) of performing imaging a predetermined number of times while relatively moving the imager in a predetermined main scanning direction with respect to the imaging object is performed a plurality of times while a position is changed in a sub scanning direction intersecting the main scanning direction, and
when a number of the original images obtained by one scanning imaging operation and having the image data stored in the memory coincides with the predetermined number (S 109), a release of the image data from the memory is executed (S110).

6. The imaging method according to claim 5, wherein if the number of the original images obtained by one scanning imaging operation and having the image data stored in the memory does not coincide with the predetermined number, the scanning imaging operation is performed again at the same position in the sub scanning direction.

7. A positional deviation amount calculation method for calculating positional deviation amounts between a plurality of original images (Im(i)) obtained by imaging an imaging object while dividing the imaging object into a plurality of imaging fields of view with adjacent ones of the imaging fields of view partially overlapped, the positional deviation amount calculation method comprising:
storing (106) image data corresponding to the original images in a memory (144); and
calculating (S107) the positional deviation amounts between the original images, wherein
for each of the original images, an object image number (M(i)) indicating a number of calculation object images, the calculation object images being other original images having the imaging fields of view overlapping that of the original image and serving as calculation objects for the positional deviation amount, is set based on a positional relationship of the imaging fields of view; and
when the original image is newly obtained,
the positional deviation amount between this new original image and the calculation object image already obtained and having the image data stored in the memory is calculated based on image contents of overlapping parts of these images, and
out of the image data storing the memory, the image data corresponding to a particular image is released from the memory (S110), the particular image being the original image of which a number (C(i)) of the calculation object images already used to calculate the positional deviation amount between this particular image increased to the object image number.

8. A computer program for causing a computer device to perform each processing of the positional deviation amount calculation method according to claim 7.

9. A computer-readable recording medium, storing non-transitorily the computer program according to claim 8.

10. An imaging apparatus (1), comprising:
an image acquisitor (13) which obtains a plurality of original images by imaging an imaging object with imaging fields of view made different from each other and adjacent ones of the imaging fields of view partially overlapped;
a memory (144) which temporarily stores image data corresponding to the original images; and
a processor (141) which calculates positional deviation amounts between the plurality of original images, wherein
for each of the original images, an object image number (M(i)) indicating a number of calculation object images, the calculation object images being the other original images having the imaging fields of view overlapping that of the original image and serving as calculation objects for the positional deviation amount, is set in advance based on a positional relationship of the imaging fields of view;
when the original image is newly obtained, the processor
calculates the positional deviation amount between this new original image and the calculation object image already obtained and having the image data stored in the memory based on image contents of overlapping parts of these images, and
releases the image data corresponding to a particular image from the memory, the particular image being the original image of which a number (C(i)) of the calculation object images already used to calculate the positional deviation amount between this particular image increased to the object image number.
